**Europäisches Patentamt**

**European Patent Office**

**Office européen des brevets**

(19)

(11) Publication number: **0 413 447 A2**

# EUROPEAN PATENT APPLICATION

(12)

(21) Application number: **90308068.7**

(22) Date of filing: **24.07.90**

(51) Int. Cl.⁵: **G05D  13/62, A43D 8/40**

(30) Priority: **12.08.89 GB 8918441**
 **12.07.90 GB 9015311**

(43) Date of publication of application:
 **20.02.91 Bulletin  91/08**

(84) Designated Contracting States:
 **DE FR GB IT**

(71) Applicant: **BRITISH UNITED SHOE MACHINERY LIMITED**
 **PO Box 88 Ross Walk**
 **Belgrave Leicester LE4 5BX(GB)**

(72) Inventor: **Cameron, Ewen Rothnie**
 **17 Granville Avenue**
 **Oadby, Leicester LE2 5FL(GB)**
 Inventor: **Smith, Andrew**
 **65 Sycamore Way**
 **Littlethorpe, Leicester LE9 5HW(GB)**

(74) Representative: **Atkinson, Eric**
 **c/o British United Shoe Machinery Limited**
 **P.O. Box 88 Ross Walk**
 **Belgrave Leicester LE4 5BX(GB)**

(54) **Drive arrangement.**

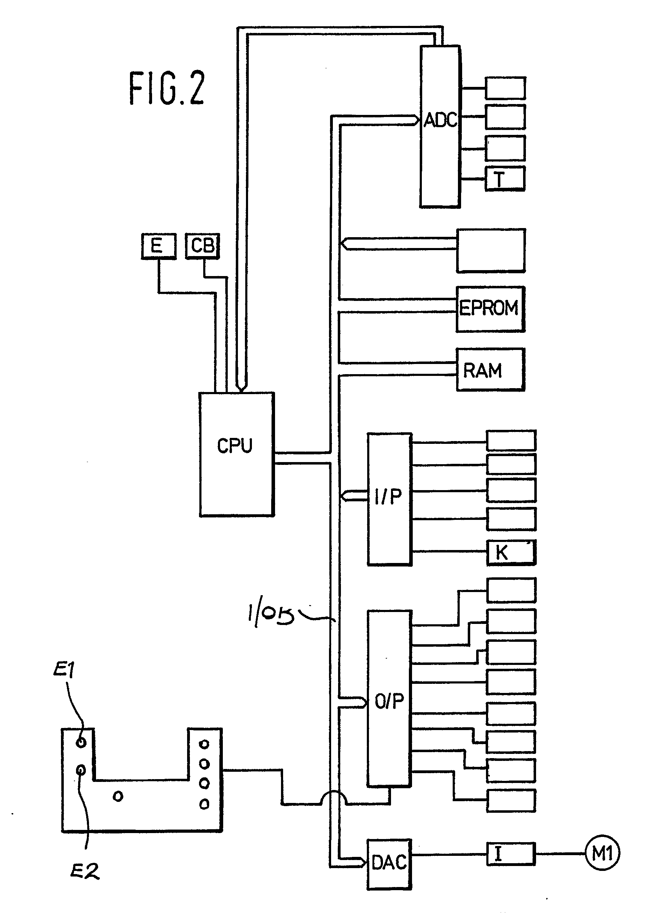

(57) A drive arrangement comprises an a.c. induction motor (M1) having a rotary output shaft, and a drive control (Figure 2), by which the speed of rotation of the shaft is controlled. The drive control comprises a signalling arrangement (e.g. a transducer (T) supplying an analogue signal converted by an analogue-to-digital converter (ADC) or a direct digital signalling arrangement) for supplying a digital signal having a value corresponding to the desired speed of rotation of the motor shaft, together with a processor (CPU) which receives the digital signal and at least one other input and processes the digital signal in accordance therewith. The processor supplies a corresponding, but modified, digital output signal to a digital-to-analogue converter (DAC) which converts the digital output signal to an analogue control signal and supplies it to an inverter which, in response thereto, drives the a.c. induction motor. An encoder (E) is operatively connected to the output shaft of the motor and supplies monitoring signals to the processor which processes them to provide a comparison value (representing actual rotation speed of the shaft) for comparison with a value corresponding to the signal from the signalling arrangement (representing the desired rotation speed). In the event of a discrepency between the two values, the digital output signal to the DAC is modified accordingly. A further input is provided by setting means (SS7) for setting a maximum speed of rotation of the shaft as a proportion of the "basic speed" of the motor, said setting means also supplying a signal to the processor (CPU) whereby the output digital signal is modified by a corresponding reduction factor.

FIG.2

EP 0 413 447 A2

# DRIVE ARRANGEMENT

This invention is concerned with a drive arrangement comprising an a.c. induction motor having a rotary output shaft, and a drive control by which the speed of rotation of the shaft is controlled.

It is known to provide, for driving a.c. induction motors, an inverter to which a.c. power is supplied and which initially rectifies the a.c. supply to a smooth d.c. supply whereafter, in response to a control signal, e.g. a voltage, the smoothed d.c. supply is converted to an a.c. supply the frequency of which is determined according to the value of the signal (voltage). The re-conversion to a.c. supply is achieved by so-called "chopping" of the d.c. supply to configure it to a new a.c. wave form of an appropriate frequency.

The advantage of such an arrangement is one of cheapness, in particular as compared with, say, a d.c. servomotor, without signficant loss of accuracy of control. In such cases, however, the system is effectively "open loop", so that the degree of control is nevertheless limited.

Where an inverter arrangement is used as part of a drive control for an a.c. induction motor, in general only a simple speed control is provided by which the control signal (voltage) to the inverter can be set manually. Such an arrangement is therefore not likely to be especially useful either where accuracy of control is required or indeed where variations in the speed of rotation of the output shaft of the motor are required.

It is the object of the present invention to provide an improved drive arrangement in which, while retaining the advantages in terms of expense of using an a.c. induction motor with an inverter arrangement, a greater degree of control is obtained that has previously been the case.

The invention thus provides a drive arrangement comprising an a.c. induction motor having a rotary output shaft, and a drive control by which the speed of rotation of the shaft is controlled, characterised in that the drive control comprises a signalling arrangement for supplying a digital signal having a value corresponding to the desired speed of rotation of the motor shaft, a processor which receives the digital signal from the signalling arrangement together with at least one other input and processes the digital signal in accordance therewith thus to provide a digital output signal corresponding to said digital signal received by the processor, a digital-to-analogue converter which receives the digital output signal from the processor and converts it to an analogue control signal, an inverter which receives said control signal from the digital-to-analogue converter and, in response to such signal being received, supplies a corresponding drive signal to the a.c. induction motor, and an encoder operatively connected to the output shaft of the motor, which encoder in turn supplies monitoring signals to the processor (constituting the other or one of said other inputs to the processor), wherein the processor processes such monitoring signals to provide a comparison value (representing actual rotation speed) for comparison with a value corresponding to the signal from the signalling arrangement (representing the desired rotation speed) and, in the event of a discrepancy between the two values, modifies its digital output signal to the digital-to analogue converter accordingly.

It will thus be appreciated that, using the drive arrangement in accordance with the invention, firstly the control signal to the inverter is subject to processing according to various different factors, thus affording a high degree of control of the value of the control signal, and in addition, by the provision of the encoder, and thus of a feed-back system for the inverter, the actual speed of rotation of the output shaft of the motor can be accurately controlled.

Preferably the encoder comprises a pulse generator which is driven from the output shaft of the motor. The encoder thus can supply a train of pulses the frequency of which can be compared by the processor, e.g. using look-up tables according to the digital signal which is supplied to the processor, representing the desired speed of rotation. The comparison between the frequency of the encoder pulses and the value indicated by the look-up tables can then be used to provide a reduction or incremental factor which can then be applied to the output digital signal from the processor to correct any discrepancy found between the actual and desired speeds of rotation.

In many instances it is desirable that the maximum speed of rotation of the motor output shaft can be controlled. For example, it may be that the speed of operation of a machine of which the drive arrangement forms part must be varied according to the nature of the particular work which it is performing, or again according to the skill of the operator. In accordance with the present invention, therefore, preferably setting means is provided for setting the maximum speed of rotation of the motor output shaft, said means supplying an appropriate signal to the processor (constituting another of said other inputs), the processor, in response to a signal of maximum value received from the signalling arrangement, supplying an output signal modified in accordance with the signal received from the setting means to provide the set maximum speed of rotation of the drive shaft, while below such maxima the output signal supplied by the processor varies proportionately with the digital signal received by it from the signalling arrangement, as modified by the signal from the setting means, over the whole of the range of values thereof. In this way, it will be appreciated, the degree of control in terms of resolution can be maintained, over the range of value for the signal supplied by the signalling arrangement, regardless of the maximum speed which is set.

In a preferred embodiment of the drive arrangement in accordance with the invention the signalling arrangement comprises a controller which supplies an analogue output signal having a value corresponding to the desired speed of rotation of the motor shaft, and an analogue-to-digital converter which receives said analogue signal from the controller and converts it to a digital signal for supply to the processor as aforesaid. More particularly, in such a case conveniently said controller comprises a transducer having a displaceable element and supplying an output signal in the form of a voltage the value of which varies according to the displacement of said element. In this way, the operator of a machine incorporating such a drive arrangement can, by controlling the position of the displaceable element, e.g. by means of a foot treadle arrangement, closely control the value of the digital signal supplied by the signalling arrangement, and thus the speed of rotation of the drive shaft in a convenient and efficient manner.

The drive arrangement in accordance with the invention is suitable for use in a so-called folding machine in the shoe and allied industries, but would also be useful if other machinery requiring accurate speed control, especially, but not exclusively, where the speed is controlled by the operator him/herself.

There now follows a detailed description, to be read with reference to the accompanying drawings, of a folding machine incorporate the drive arrangement in accordance with the invention. It will of course be appreciated that this machine has been chosen for description merely by way of exemplification of the invention and not by way of limitation thereof.

In the accompanying drawings:
Figure 1 is a front view of the machine incorporating the drive arrangement in accordance with the invention;
Figure 2 is a block diagram of control circuitry, including the drive arrangement, of said machine; and
Figures 3A and 3B constitute a flowchart indicating the control of the speed of rotation of a main drive shaft of the machine.

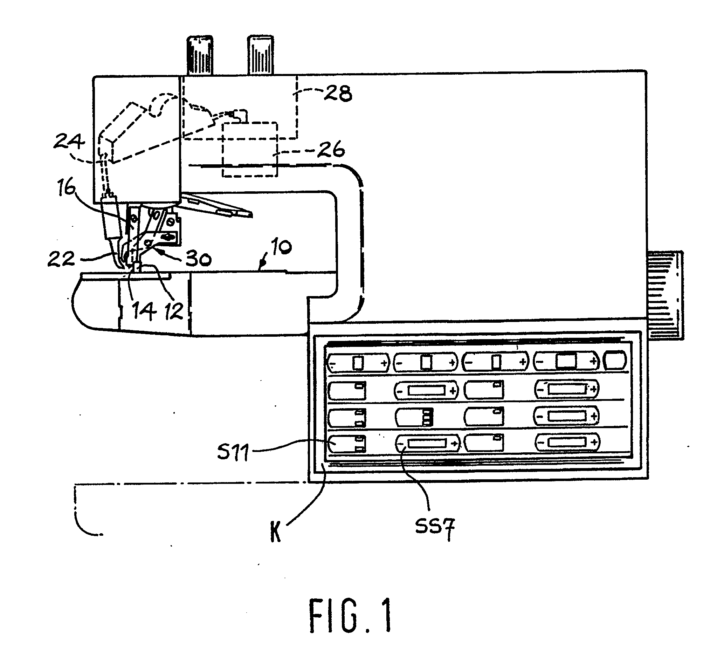

The machine now to be described is a so-called a thermo-cementing and folding machine, which finds use in the shoe industry and allied trades and is generally similar, except as hereinafter described, to the machine described in GB-A 2141968, itself a modification of the machine described in EP-A 0110591. The machine thus comprises a work table 10 on which a workpiece can be supported at an operating locality of the machine, at which conventional folding instrumentalities are located, comprising a fold-initiating block 12 having an upwardly curved work-guiding surface 14, a gauge finger 16, a creaser foot 22 and a lip turner (not shown), which completes the fold of the workpiece edge over the creaser foot. During folding, adhesive can be applied to the workpiece edge through an outlet in the creaser foot, to which adhesive is supplied via a delivery tube 24 from a melt chamber 28 under the action of a gear pump 26, the melt chamber 28, delivery tube 24 and creaser foot 22 being appropriately heated. Other features of the folding instrumentalities are shown in Figure 1.

"Downstream" of the folding instrumentalities are located conventional edge snipping means generally designated 30, comprising a fixed and a movable blade, and conventional workpiece feeding means in the form of an orbitally moving hammer-and-anvil arrangement (not shown), which also serves to consolidate the fold. A work release clamp (not shown) is also provided for clamping the work against the under-side of the creaser foot during the return movement of the hammer-and-anvil arrangement.

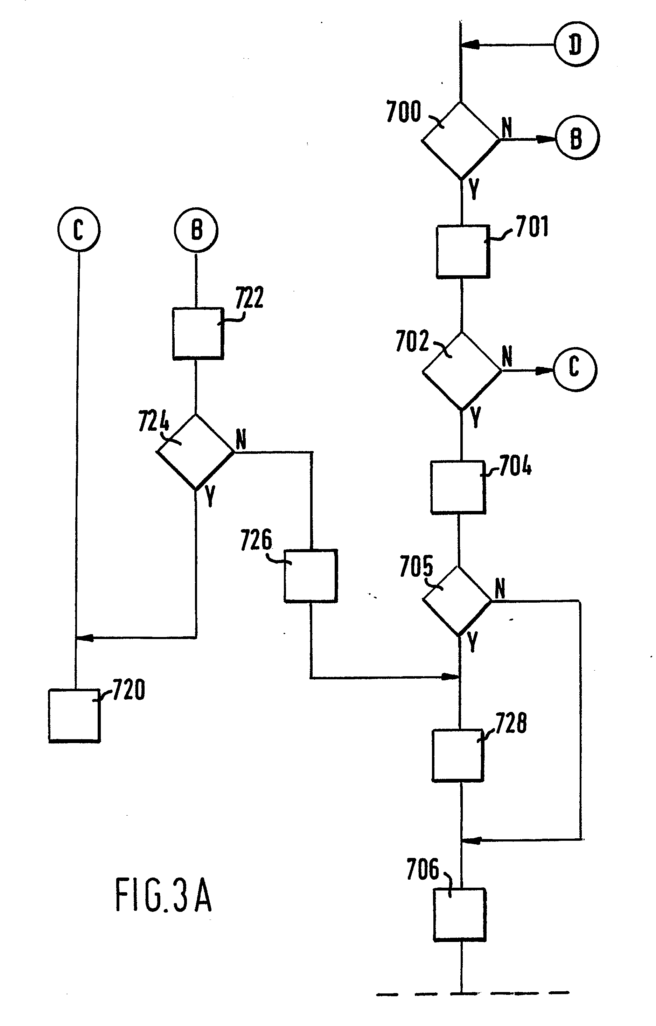

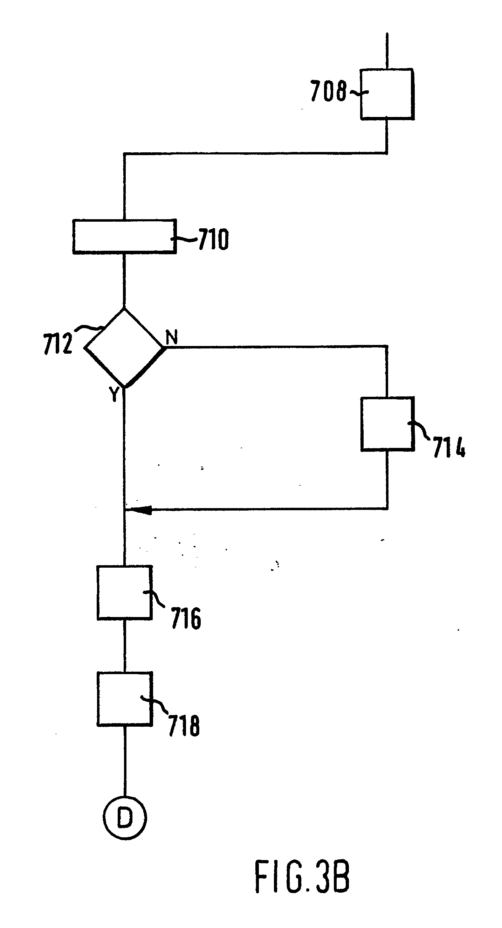

The hammer-and-anvil arrangement is driven through a main drive shaft (not shown) by means of an electric motor M1 operation of which is controlled in turn by computer control means (see Figures 2 and 3) through an inverter I. The inverter receives drive signals from the computer control means in the form of a voltage and in response thereto drives the electric motor. The electric motor is in this case an a.c. induction motor. As will be hereinafter described in detail, the motor and more particularly the speed of the motor, and thus the speed of rotation of the main drive shaft (hereinafter referred to as the "feed speed"), may be controlled either automatically or by the operator using a treadle (not shown), which incorporates a variable output signalling device in the form of a transducer T (Figure 2), forming part of operator-controlled feed speed variation means for varying the speed of rotation of the main drive shaft and thus the speed at which workpieces are fed through the operating locality of the machine.

The machine is also provided with a control panel or keyboard K which includes, inter alia, the following devices for the purposes set out hereinafter:

Switch S11, by which the control of the motor is selectively set for automatic or under operator control, pilot lamps being provided for indicating which selection has been made; and

Selector device SS7 by which, as will be described in detail hereinafter, a maximum for the speed of rotation of the main drive shaft "feed speed" can be set.

The machine of which the drive arrangement in accordance with the invention forms part has a 12 volt control circuit supplied with an a.c. supply, from which is derived an unsmoothed 12 volt a.c. circuit which supplies power to a mains-controlled control box CB supplying a "mains interrupt" signal, to be referred to hereinafter. In addition there is derived from the a.c. circuit a smoothed 12 volt d.c. circuit which supplies power to various integers of the machine not relevant to the present invention, and also from which is derived a 5 volt d.c. circuit which drives a central processor unit CPU and associated circuits and also provides power to the various switch and selector devices of the control circuits of the machine. The central processor unit CPU, which forms part of the computer control means of the machine, is constituted by a single-chip 8-bit micro-computer (in casu, a Zilog Z8681 which, in addition to a microprocessor, also incorporates a random access memory/scratch pad RAM (shown separately in Figure 2); this microprocessor is obtainable from Zilog Inc). The CPU is connected via input-output bus I/OB with input and output ports I/P, O/P and with a non-volatile memory in the form of an EPROM (erasable programmable read-only memory), which is accessed by the CPU via the I/OB for instructions to execute. In addition, an analogue-to-digital converter ADC is provided, to which signals are supplied by various integers (as shown in Figure 2) as well as the transducer T, and a digital-to-analogue converter DAC which supplies control (drive) signals for the motor M1. The ADC is interrogated by the CPU, via the I/OBus, each time a mains interrupt signal is supplied to the CPU by control box CB. More particularly the various channels of the ADC are interrogated in turn, one in response to each mains interrupt in a so-called "wrap around" sequence. The ADC supplies information as to the state of the interrogated channel via a direct input to the CPU. The digital-to-analogue converter DAC receives output signals from the central processor unit CPU and, in response to such signals, supplies an analogue signal to the inverter I, constituting a control signal (voltage) for the inverter. The inverter is also supplied with an a.c. mains power supply in the conventional manner. A shaft encoder E driven by the main drive shaft is also provided having a direct "interrupt" input to the CPU. In response to the various signals thus supplied to the CPU, the CPU supplies various outputs via the data bus I/OB to various sub-circuits.

It will thus be appreciated that, for driving the motor M1, firstly a digital signal is supplied to the central processor unit CPU, representing the desired motor shaft speed of rotation. This digital signal may be supplied either, where a "manual" operation is selected by switch S11, from the transducer T via the analogue-to-digital converter ADC (by which the voltage supplied from the transducer is converted to a digital signal), or, where "automatic" operation has been selected, by a direct input into the central processor unit of a digital signal, this being in fact a function of the software itself. Such signal would correspond to the "basic speed" of the motor set at 2,400 rpm, which speed has been assessed as being the optimum for the operation of a machine of this kind. The central processor unit CPU receives the digital input signal together with other inputs, in particular (as will be described in detail hereinafter) a signal from selector device SS7, according to the selected maximum speed of rotation of the drive shaft, and also signals from the incoder E. The digital input signal is processed by the CPU in accordance with these inputs and a digital output signal, corresponding to the input signal as processed, is supplied to the digital-to-analogue converter DAC, by which the digital output signal is converted to an analogue control signal, which is then passed to the inverter I. The motor is thus driven at a speed corresponding to the control signal 30 passed to the inverter. As already mentioned the motor drives the shaft encoder E which in turn supplies to the central processor unit CPU a train of pulses constituting a signal representing the actual speed of rotation of the shaft. This signal can then be compared, as will be described hereinafter, with a corresponding value representing the desired speed of rotation and any necessary adjustment is then made in the processing of the digital input signal to the processor prior to the control signal being supplied to the inverter I; in this way any discrepency between the desired and actual speeds of rotation of the drive shaft is corrected. It will thus be appeciated that in this way, a closed loop system is provided which ensures that the output speed of rotation of the motor corresponds with the desired speed.

Referring now to Figures 3A and 3B, at step 700 the status of seleter switch S11 is interrogated. If "automatic" operation is selected then at step 701 flag A is set to signal one and at step 702 a "workpiece present" signal is requested; this may be provided e.g. by detector means E1, E2 arranged at the operating locality of the machine. If a workpiece is present, then at step 704 a signal representing the "basic" speed of the motor (in this case set at 2,400 rpm) is generated. At step 705 the status of flag A is interrogated. If it does not equal zero then at step 706 the status of selector device SS7 is accessed and a reduction factor is determined by which a proportional value of the set "basic" speed can be calculated. According to the selection made, the value of the signal representing the "basic" speed is then reduced by said reduction factor. At step 708 the software then calculates, e.g. by comparing the value thus reduced with look-up tables, the value of the output digital signal to be supplied to the digital-to-analogue converter DAC and thus to the inverter I, whereby to achieve the desired speed of rotation of the motor driveshaft; the output digital signal is supplied accordingly, and in response thereto, a control signal (voltage) is supplied to the inverter by which the speed of rotation of the motor drive shaft is controlled.

At step 710 the actual speed of rotation of the drive shaft, which is monitored by the shaft encoder E, is calculated from a signal, in the form of a train of pulses, supplied by the shaft encoder E to the CPU. At step 712 the signal supplied by the encoder E is compared, using look-up tables (which may be the same tables as previously referred to in), with a value representing the desired speed of rotation of the shaft, with a view to determining whether the difference lies within a pre-set tolerance. If the difference lies outside the given tolerance, then a so-called "feedback factor" is calculated at step 714, which is applicable to the output digital signal supplied by the CPU (as previously calculated at step 708) so as to bring the actual speed of rotation of the shaft to the desired speed. The thus calculated feedback factor is then stored by the CPU for application, without further modification, provided that the difference between the desired and actual speeds of rotation of the drive shaft remains within the tolerance; if no modification of the output signal is required (i.e. when there is no discrepency or the discrepency is within the tolerance), step 714 is of course omitted. The feedback factor is then applied to the output digital signal value at step 716. The appropriate digital output signal is supplied to the digital-to-analogue converter DAC at step 718 and the motor M1 is thus driven accordingly. The circuit then loops back once more to step 700.

If at any stage the "workpiece present" signal at step 702 is discontinued, indicating that a workpiece is no longer present, then at step 720 a signal to stop the operation of motor M1 is supplied.

In the case where at step 700 a "manual" operation has been selected, then at step 722 the value of the digital input signal received by the CPU via the ADC from the transducer T is read and a reduction factor is calculated representing the proportion of the maximum value which the particular read value constitutes. If the value indicates a "stop" condition then at step 724 the flowchart leads to step 720 whereupon a "zero" signal is supplied to the CPU and the motor is (or remains) switched off. Otherwise following step 724, i.e. when "drive" has been selected, flag A is set at zero (step 726), and at step 728 the calculated reduction factor is applied to the value representing the basic speed. At step 706 this reduced value is then further reduced according to the setting of SS7 (as above described) and thereafter subsequent steps are followed as described above.

It will be appreciated that, by applying the reduction factor(s) and the feedback factor to the output digital signal as aforesaid, the range of control (resolution) provided by the transducer is in no way diminished by the reduction of the motor speed: that is to say the motor speed is reduced proportionately to the signal from the transducer according to the applied factors. In this way, the operator control in particular is retained regardless of the maximum speed of operation at which the motor is set. This has been found to be especially useful in a case of an operator who is learning the skill of using the machine in question, since the control remains as sensitive, regardless of the maximum speed of operation.

## APPENDIX

### Inscriptions for flow chart 'boxes'

700 Switch 11: Is 'automatic' operation of motor M1 selected?

701 Set Flag A to equal 1 (one)

702 Are "workpiece present" sensors E1, E2 covered?

704 Set motor (M1) speed signal to maximum (= 2400 r.p.m.)

705 Does Flag A = 0?

706 Device SS7: apply any reduction factor to signal value set at 704

708 Calculate value of digital output signal required to drive motor at set speed

710 Calculate actual speed of rotation of drive shaft from encoder (E) signal and determine feedback factor

712 Is difference between desired and actual speeds of rotation within pre-set tolerance?

714 Modify feedback factor

716 Apply feedback factor to value calculated at 708 (or, if A = 0, as modified at 728)

718 Supply digital output signal to DAC for driving motor (M1)

720 Stop motor (M1)

722 Read transducer (T) signal and calculate reduction factor for application to value set at 704

724 Does value of transducer (T) signal indicate "stop" condition of motor (M1)?

726 Set Flag A to equal zero (0)

728 Apply reduction factor (of 722) to value calculated at 708.

## Claims

1. Drive arrangement comprising

an a.c. induction motor (M1) having a rotary output shaft, and

a drive control by which the speed of rotation of the shaft is controlled,

characterised in that the drive control comprises a signalling arrangement (T, ADC) for supplying a digital signal having a value corresponding to the desired speed of rotation of the motor shaft,

a processor (CPU) which receives the digital signal from the signalling arrangement (T, ADC) together with at least one other input (1/P) and processes the digital signal in accordance therewith thus to provide a digital output signal corresponding to said digital signal received by the processor (CPU),

a digital-to-analogue converter (DAC) which receives the digital output signal from the processor (CPU) and converts it to an analogue control signal,

an inverter (I) which receives said control signal from the digital-to-analogue converter (DAC) and, in response to such signal being received, supplies a corresponding drive signal to the a.c. induction motor (M1), and

an encoder (E) operatively connected to the output shaft of the motor (M1), which encoder (E) in turn supplies monitoring signals to the processor (CPU) (constituting the other or one of said other inputs to the processor),

wherein the processor (CPU) processes such monitoring signals to provide a comparison value (representing actual rotation speed) for comparison with a value corresponding to the signal from the signalling arrangement (T, ADC) (representing the desired rotation speed) and, in the event of a discrepancy between the two values, modifies its digital output signal to the digital-to-analogue converter (DAC) accordingly.

2. Drive arrangement according to Claim 1 wherein the encoder (E) comprises a pulse generator (E) which is driven from the output shaft of the motor (M1).

3. Drive arrangement according to Claim 1 or Claim 2 characterised in that setting means (SS7) is provided for setting the maximum speed of rotation of the motor output shaft, said means (SS7) supplying an appropriate signal to the processor (CPU) (constituting another of said other inputs),

and in that the processor (CPU), in response to a signal of maximum value received from the signalling arrangement (T, ADC), supplies an output signal modified in accordance with the signal received from the setting means (SS7) to provide the set maximum speed of rotation of the drive shaft,

and further in that below such maxima the output signal supplied by the processor CPU) varies with the digital signal received by it from the signalling arrangement (T, ADC), as modified by the signal from the setting means SS7), proportionately over the whole of the range of values thereof.

4. Drive arrangement according to any one of the preceding claims characterised in that the signalling arrangement (T, ADC) comprises

a controller (T) which supplies an analogue output signal having a value corresponding to the desired speed of rotation of the motor shaft, and

an analogue-to-digital converter (ADC) which receives said analogue signal from the controller (T) and converts it to a digital signal for supply to the processor (CPU) as aforesaid.

5. Drive arrangement according to Claim 4 wherein said controller (T) comprises a transducer (T) having a displaceable element and supplying an output signal in the form of a voltage the value of which varies according to the displacement of said element.

6. Drive arrangement according to Claim 5 wherein said element is displaced by means of a foot treadle arrangement.

FIG.1

FIG.2

EP 0 413 447 A2

FIG.3A

708

710

712  N

Y

714

716

718

D

FIG.3B